# EUROPEAN PATENT SPECIFICATION

(11) **EP 0 517 212 B1**
(45) Date of publication and mention of the grant of the patent: **24.04.1996**
(21) Application number: 92109454.6
(22) Date of filing: 04.06.1992
(51) Int. Cl.: A01N 3/02

(54) **Composition and process for maintaining freshness of cut flowers**
Mittel und Verfahren zur Erhaltung der Frische von Schnittblumen
Composition et procédé pour maintenir la fraîcheur des fleurs coupées

(30) Priority: 07.06.1991 JP 162474/91
(43) Date of publication of application: 09.12.1992
(73) Proprietor: KUREHA KAGAKU KOGYO KABUSHIKI KAISHA, Chuo-ku Tokyo 103 (JP)
(72) Inventor: Watanabe, Takeo, Iwaki-shi, Fukushima-ken 974 (JP); Arahira, Masato, Iwaki-shi, Fukushima-ken 974 (JP); Murakami, Aiko, Iwaki-shi, Fukushima-ken 974 (JP)
(74) Representative: Kraus, Walter, Dr.

(56) References cited:
- EP-A- 0 267 778
- GB-A- 2 180 236
- US-A- 3 907 539

## Description

### BACKGROUND OF THE INVENTION

### 1. Field of the Invention

The present invention relates to a composition for maintaining the freshness of cut flowers and a process for maintaining the freshness of cut flowers using the same. More particularly, the invention relates to a novel composition for maintaining the freshness of cut flowers, which can prevent the petals, stems, and leaves of cut flowers after the harvesting of flower and ornamental plants from wilting and a process for maintaining the freshness of cut flower using the same.

### 2. Description of the Related Art

The processes for maintaining cut flowers after harvesting, which have hitherto been carried out are classified as follows:
1) A process in which staleness of the water due to the cut portions of cut flowers having been soaked is prevented, the propagation of microorganisms from the cut portions are suppressed to prevent the cut flowers from rotting, and the blockage of vessels is minimized to secure a good water uptake;
2) A process in which nutrition is positively taken up;
3) A process in which a growth suppressing agent is used to delay aging and exhaustion; and
4) A process in which the opening and closing of the vesicles is suppressed to minimize the transpiration of moisture.

In the process mentioned under (1), disinfectants, such as sodium hypochlorite and citric acid salt of 8-hydroxyquinoline, and agents for suppressing the formation of ethylene, such as silver thiosulfate are used for the prevention of rotting.

In the process mentioned under (2), saccharides (e.g. glucose and sucrose) and fertilizers are used as the nutrition. As the growth suppressants in process (3), benzyladenine, and B-Nine are used, and as the suppressants of opening and closing vesicles, citric acid salt of 8-hydroxyquinoline and saccharides are used.

However, these known processes possess their own drawbacks that one of them cannot exhibit the effect of maintaining the freshness of all cut flowers, another process can be used only with complicity and has a limited application region, or an agent where care should be taken in the toxic viewpoint must be used. Consequently, there has been a need for developing a novel agent which always exhibits a better effect of maintaining the freshness stably, and a technique for maintaining the freshness of cut flower utilizing the agent.

### SUMMARY OF THE INVENTION

The object of the present invention is to completely solve the conventional drawbacks and to provide a novel composition for maintaining the freshness of cut flowers, which can stably maintain various cut flowers in their fresh states over a prolonged period allowing the stems, leaves, buds, and flowers to grow satisfactorily and come into flowering, and a process for maintaining the freshness of cut flowers.

The present inventors have made serious studies on the maintenance of the freshness of cut flowers for providing an inexpensive, safe, and simple process. As a result, it has been found that when the cut portions of cut flowers are soaked in water containing an azole-substituted cyclopentanol derivative represented by the following formula (I) for a prescribed period, the storage period of the cut flower can be prolonged. In order to better secure such an effect, the present inventors have continued studying. As a result, it has further been found that when antibacterial agent, 2- bromo-2-nitro-1,3-propandiol, is used jointly, such an effect is drastically enhanced, resulting in the prevention of wilting of leaves, prevention of yellowing, and the prevention of the wilting of petals, and leading to an excellent effect in maintaining the freshness of cut flowers, thereby achieving the present invention.

That is, a composition for maintaining the freshness of cut flowers according to the present invention is characterized by containing an azole-substituted cyclopentanol derivative represented by the following formula (I) and 2-bromo-2-nitro-1,3-propandiol as effective components.

Also, the process for maintaining the freshness of cut flowers according to the present invention is characterized by using an azole-substituted cyclopentanol derivative represented by the following formula (I) and 2-bromo-2-nitro-1,3-propandiol as effective components. 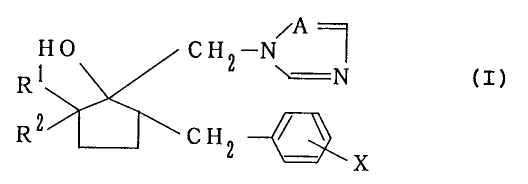
wherein, A represents a nitrogen atom or CH group, R¹ and R² independently represent hydrogen or a C₁ - C₃ alkyl group, and X represents a hydrogen atom or a halogen atom.

### DETAILED DESCRIPTION OF PREFERRED EMBODIMENTS

The present invention will now be described in detail.

It is known from US-A-3 907 539 that 2-bromo-2-nitro-1,3-propandiol is used as the germicidal additive in the composition for preserving cut flowers.

The azole-substituted cyclopentanol derivative which is used as an effective component in the present invention is a substance disclosed in Japanese unexamined Patent Publication 149667/1987 or 93573/1989. These publications disclose that the azole-substituted cyclopentanol derivative has an anti-fungal effect and an effect of regulating the growth of plants, and it is used as an agricultural and horticultural chemical, but do not disclose that it is effective in cut flowers.
Accordingly, it is surprised that the above azole-substituted cyclopentanol derivative exhibits an effect of maintaining the freshness of cut flowers.

Typical examples of azole-substituted derivatives represented by the formula (I) used according to the present invention are shown in Table 1.

In the expressions of stereoisomers, A and B show the following stereostructures, respectively. 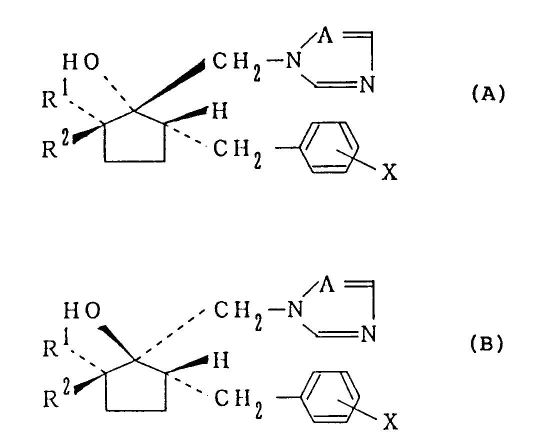
wherein A, R¹ , R² , and X have the same meanings as described above.

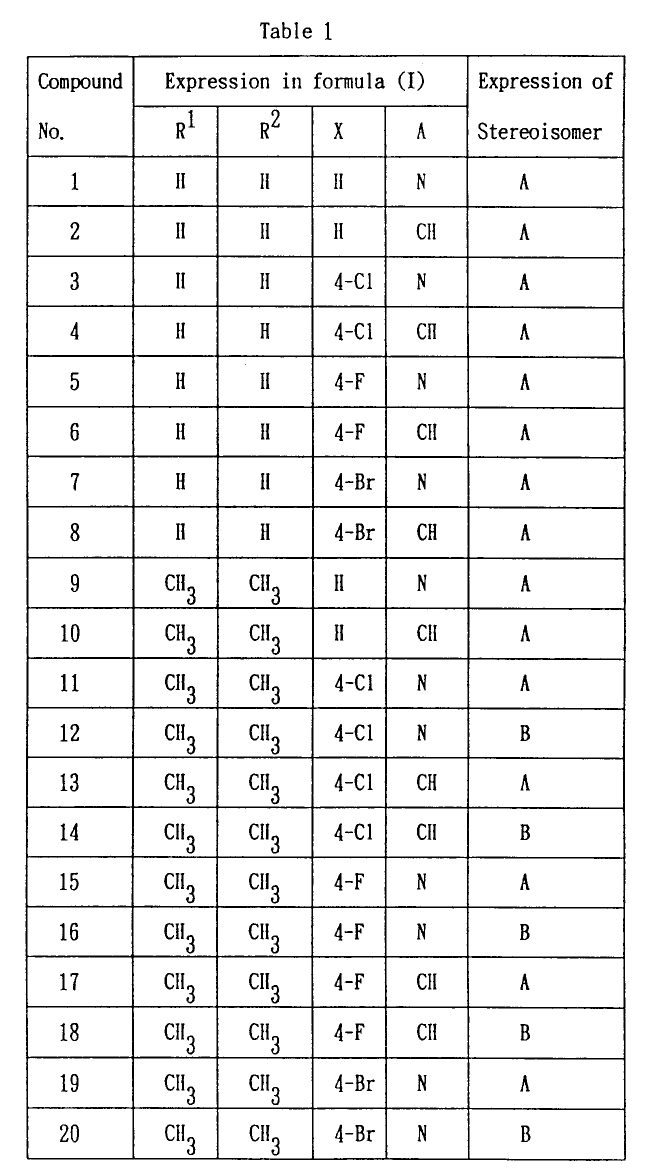

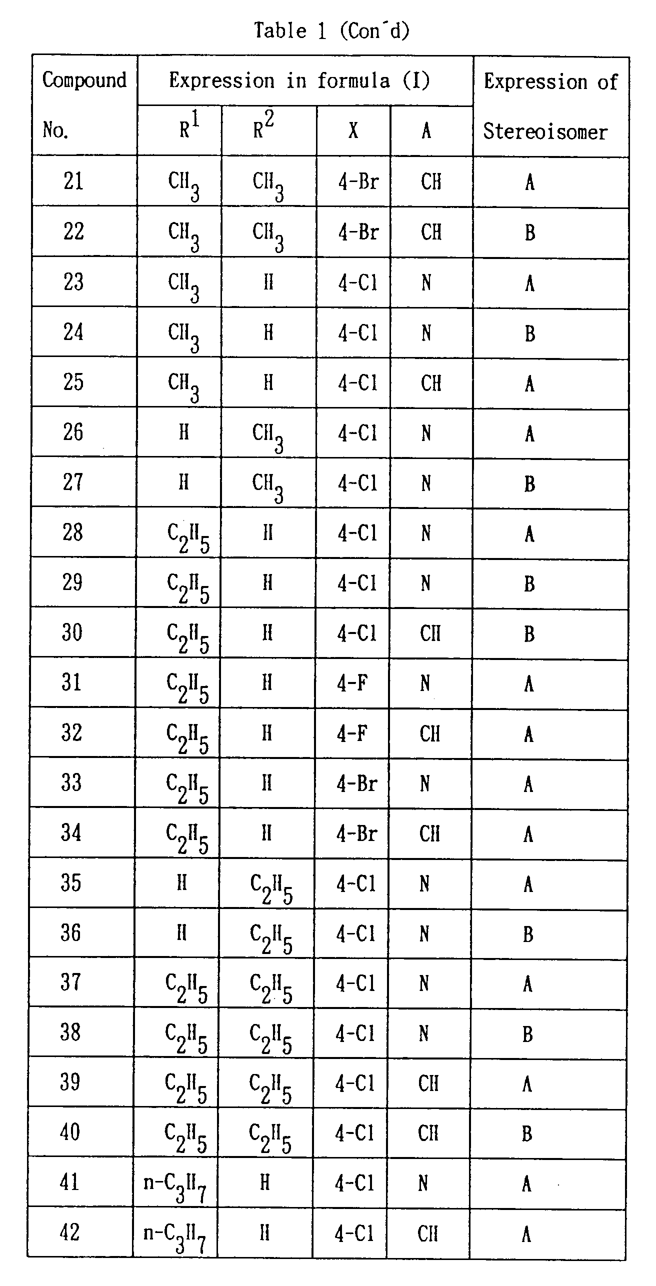

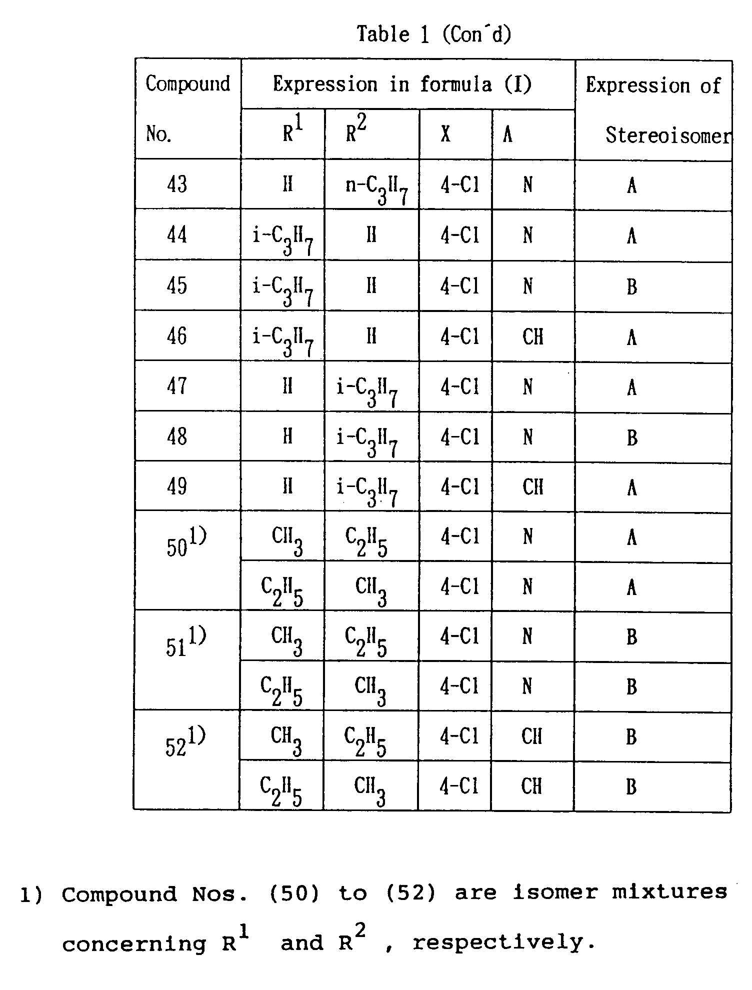

In the present invention, the azole-substituted cyclopentanol derivative represented by the above formula (I) and 2-bromo-2-nitro-1,3-propandiol can be applied to cut flowers in the form of aqueous solution. When being used, the concentrations of these compounds in water, which vary with the soaking period, environments at the time of soaking, kinds and number of flowers, kind of preparation, etc., are generally 1 - 1000 ppm, preferably 5 - 100 ppm, for both compounds. In this case, the joint use of 0.2 to 1.5% of saccharides such as glucose and sucrose and/or 0.005 to 1.5% of organic acids such as citric acid, tartaric acid, and malic acid is particularly effective.

When the azole-substituted cyclopentanol derivative represented by the above formula (I) and 2-bromo-2-nitro-1,3-propandiol is used, water containing them in concentrations suitable for use is prepared to be used. They can be applied either after preparation of the water containing them in their appropriate concentrations may be directly used or a preparation containing the azole-substituted cyclopentanol derivative represented by the above formula (I) and 2-bromo-2-nitro-1,3-propandiol in high concentrations may be diluted with water to appropriate concentrations to be used.

The preparation containing the azol-substituted cyclopentanol derivative represented by the above formula (I) and 2-bromo-2-nitro-1,3-propandiol in high concentrations may be in the form of a concentrated aqueous solution, a dust, a wettable powder, an emulsifiable concentrates, or a flowable.

In the case of the preparation, a solid carrier such as clay, bentonite, or diatomaceous earth, a liquid carrier, such as acetone, xylene, or an alcohol, a surfactant, such as an alkyl sulfate or a polyoxyethylene alkyl ether, a preparation aid such as an alginate or CMC, etc. may be utilized.

In the case where the azole-substituted cyclopentanol derivative represented by the above formula (I) and 2-bromo- 2-nitro-1,3-propanediol are used as an aqueous solution according to the present invention, common components used for maintaining cut flowers may optionally be used in combination therewith.

For example, (1) sodium hypochlorite, silver thiosulfate, etc. may be used jointly in order to prevent the staleness of the water in which cut portions of cut flowers are soaked, and rotting of cut portions and/or stems in their soaked forms; (2) saccharides (glucose, sucrose, etc.) and fertilizers (phosphates, nitrates, etc.) may be jointly used as the nutrition; (3) organic acids (citric acid, malic acid, tartaric acid, etc.), sodium hydrogen phthalate, potassium hydrogen sulfate, etc. may be jointly used in order to acidify the pH level of the water in which cut portions are soaked; and (4) benzyladenine, B-Nine may be used for suppressing the growth of cut flowers.

The composition for maintaining the freshness of cut flowers according to the present invention is effective for various cut flowers, and gerbera, roses, carnations, chrysanthemums, lilies, turkish bellflowers, stocks, bellflowers, sunflowers, bouvardia, asters, etc., can be mentioned as the kinds of flower for which the present composition is effective.

Various varieties of these flowers may be used. For example, concerning the rose, minimum, small, and large type roses may be mentioned, and concerning the carnation, standard, spray, Euro type carnations may be mentioned.

Consequently, the use of the composition for maintaining the freshness of cut flowers should not be restricted to specific kinds or varieties of flowers.

The composition of the present invention can be used in a wide stage from the shipment stage to the stage where a consumer arranges the flowers.

The composition containing azole-substituted cyclopentanol derivative represented by the above formula (I) and 2-bromo-2-nitro-1,3-propandiol according to the present invention has an effect for maintaining the freshness of cut flowers, prevents leaves of various cut flowers from wilting, prevents yellowing, and petals from wilting, and excels in the effect for maintaining the freshness of cut flowers. Consequently, according to the present invention, various cut flowers can be stably maintained in their fresh states over a prolonged period allowing the stems, leaves, buds, and flowers to grow satisfactorily and come into flowering.

### EXAMPLES

The present invention will now be described in greater detail by referring to Preparation Examples and Test Examples. These examples are, however, not intended to restrict the present invention as long as they deviate from the scope of the present invention.

### Preparation Example 1

An aqueous solution is prepared by mixing 0.0015 parts of the listed compound (Compound No.44), 0.005 parts of 2-bromo-2-nitro-1,3-propanediol, 0.75 part of glucose, 0.05 parts of citric acid, and 99.1935 parts of water.

### Preparation Example 2

An aqueous solution is prepared by mixing the same components in the same charge amounts as those in Preparation Example 1, except for using the listed compound (Compound No.46) in place of the listed compound (Compound No.44).

### Preparation Example 3

An aqueous solution is prepared by mixing 0.0015 parts of the listed compound (Compound No.44), 0.01 parts of 2- bromo-2-nitro-1,3-propandiol, 0.5 parts of citric acid, and 99.4885 parts of water.

### Preparation Example 4

An aqueous solution is prepared by mixing the same components in the same charge amounts as those in Preparation Example 3, except for using the listed compound (Compound No.46) in place of the listed compound (Compound No.44).

### Preparation Example 5

A powdery preparation is prepared by mixing 0.15 parts of the listed compound (Compound No.44), 1 part of 2-bromo-2-nitro-1,3-propandiol, 88.35 parts of glucose, and 10 parts of citric acid. This is used after diluting with water to a desired concentration.

### Preparation Example 6

A powdery preparation is prepared by mixing the same components in the same charge amounts as those in Preparation Example 5, except for using the listed compound (Compound No.46) in place of the listed compound (Compound No.44).

### Test Example 1

### (A test generally called a Post-treatment Test in which the use of the flowers by consumer after being purchased is supposed)

In a conical flask in which 500 ml of the aqueous solution obtained from Preparation Example 1 or 2 were put and soaked five fresh flowers at the same stage of growth (roses or carnations), and the flowers were left standing in a room at a temperature of 18-26 °C, and water was daily added in an amount of being consumed. The wilting of the petals and leaves of each flower was observed, and the day at which the worth of the flowers disappeared was found to decide the storage day of each flower. The results are given in Table 2.

**Table 2**

| Test Region | Storage Day of Cut Flower | |
|---|---|---|
| | Rose | Carnation |
| Aqueous solution from Preparation Example 1 | 11 | 14 |
| Aqueous solution from Preparation Example 2 | 10 | 13 |
| Tap Water | 5 | 10 |

### Test Example 2 (A test generally called a Pre-Treatment in which the stage before the shipment is supposed)

In a beaker filled with 1 liter of the aqueous solution from Preparation Example 3 or 4 were soaked twenty five cut chrysanthemums at the same stage of growth for a prescribed period. Thereafter, five cut flowers among them were transferred to a conical flask filled with 300 ml of tap water, and left standing in a greenhouse at 20-37 °C, water was daily added in an amount of being consumed. Wilting of the leaves was observed, and the day at which the wilting of leaves no longer recovered, even when the temperature of the green house fell was found. The results are shown in Table 3.

**Table 3**

| Test Region | Soaking Period (hr) | Day at which the wilting of leaves no longer recovers (day) |
|---|---|---|
| Aqueous solution from Preparation Example 3 | 1 | 12 |
| | 5 | 14 |
| | 24 | 14 or more |
| Aqueous solution from Preparation Example 4 | 1 | 11 |
| | 5 | 14 |
| | 24 | 14 or more |
| Tap water | | 8 |

### Test Example 3

An aqueous solution in which the dust (10 g) prepared from Preparation Example 5 or 6 was dissolved in 1 liter of water was incorporated in a beaker. Twenty five fresh cut roses at the same stage of growth were soaked therein. After being soaked in a prescribed period, five of cut flowers were transferred to a conical flask filled with 300 ml of water, left standing in a room at 20-30°C, and water was daily added in an amount of being consumed. The wilting of the petals and leaves of each flower was observed, and the day at which the worth of the flowers disappeared was found to decide the storage day of each flower. The results are given in Table 4.

**Table 4**

| Test Region | Soaking period (hr) | Storage Date of Cut Flower (day) |
|---|---|---|
| Dilution of Preparation Example 5 | 5 | 8 |
| | 12 | 14 |
| | 14 | 14 |
| Dilution of Preparation Example 6 | 5 | 8 |
| | 12 | 14 |
| | 14 | 14 |
| Tap Water | | 6 |

## Claims

1. A composition for maintaining the freshness of cut flowers is characterized by containing an azole-substituted cyclopentanol derivative represented by the following formula (I) and 2-bromo-2-nitro-1,3-propandiol as effective components. 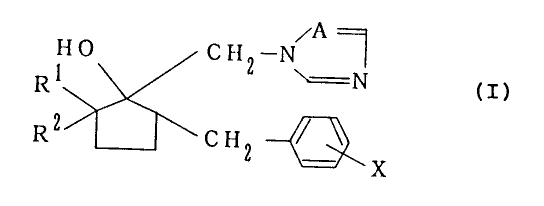 wherein, A represents a nitrogen atom or CH group, R¹ and R² independently represent hydrogen or a C₁ - C₃ alkyl group, and X represents a hydrogen atom or a halogen atom.

2. The composition according to claim 1, wherein in the formula (I) R¹ represents an isopropyl group, R² represents a hydrogen atom, X represents a chlorine atom substituted in 4-position, and A represents a nitrogen atom.

3. The composition according to claim 1, wherein in the formula (I) R¹ represents an isopropyl group, R² represents a hydrogen atom, X represents a chlorine atom substituted in 4-position, and A represents CH group.

4. The use of an azole-substituted cyclopentanol derivative represented by the following formula (I) and 2-bromo- 2-nitro-1,3-propanediol as effective components for maintaining the freshness of cut flowers. 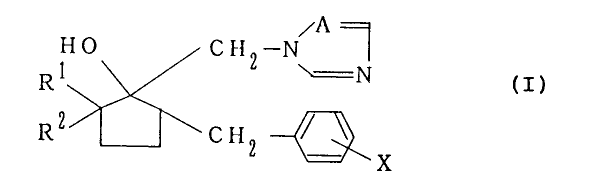 wherein A represents a nitrogen atom or CH group, R¹ and R² independently represent hydrogen or a C₁ - C₃ alkyl group, and X represents a hydrogen atom or a halogen atom.

5. The use according to claim 4, wherein in the formula (I) R¹ represents an isopropyl group, R² represents a hydrogen atom, X represents a chlorine atom substituted in 4-position, and A represents a nitrogen atom.

6. The use according to claim 4, wherein in the formula (I) R¹ represents an isopropyl group, R² represents a hydrogen atom, X represents a chlorine atom substituted in 4-position, and A represents CH group.

## Patentansprüche

1. Mittel zur Aufrechterhaltung der Frische von Schnittblumen, dadurch **gekennzeichnet,** daß es ein Azol-substuiertes Cyclopentanolderivat der folgenden Formel (I) 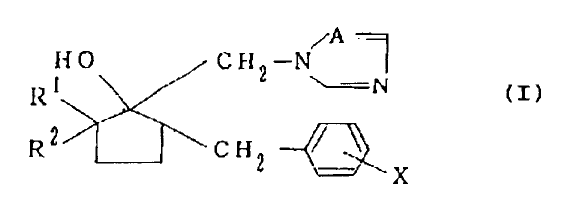 worin A ein Stickstoffatom oder eine CH-Gruppe bedeutet, R¹ und R² unabhängig voneinander ein Wasserstoffatom oder eine C₁-C₃-Alkylgruppe bedeuten, und X ein Wasserstoffatom oder ein Halogenatom bedeutet,
und 2-Brom-2-nitro-1,3-propandiol als wirksame Komponenten enthält.

2. Mittel nach Anspruch 1, dadurch **gekennzeichnet,** daß in der Formel (I) R¹ eine Isopropylgruppe bedeutet, R² ein Wasserstoffatom bedeutet, X ein Chloratom als Substituent in der 4-Position bedeutet, und A ein Stickstoffatom bedeutet.

3. Mittel nach Anspruch 1, dadurch **gekennzeichnet,** daß in der Formel (I) R¹ eine Isopropylgruppe bedeutet, R² ein Wasserstoffatom bedeutet, X ein Chloratom als Substituent in der 4-Position bedeutet, und A eine CH-Gruppe bedeutet.

4. Verwendung von einem Azol-substituierten Cyclopentanolderivat der folgenden Formel (I) 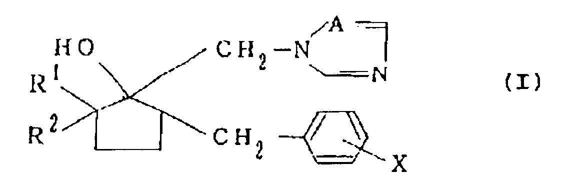 worin A ein Stickstoffatom oder eine CH-Gruppe bedeutet, R¹ und R² unabhängig voneinander ein Wasserstoffatom oder eine C₁-C₃-Alkylgruppe bedeuten, und X ein Wasserstoffatom oder ein Halogenatom bedeutet, und
von 2-Brom-2-nitro-1,3-propandiol als wirksame Komponenten zur Aufrechterhaltung der Frische von Schnittblumen.

5. Verwendung nach Anspruch 4, dadurch **gekennzeichnet,** daß in der Formel (I) R¹ eine Isopropylgruppe bedeutet, R² ein Wasserstoffatom bedeutet, X ein Chloratom als Substituent in der 4-Position bedeutet, und A ein Stickstoffatom bedeutet.

6. Verwendung nach Anspruch 4, dadurch **gekennzeichnet,** daß in der Formel (I) R¹ eine Isopropylgruppe bedeutet, R² ein Wasserstoffatom bedeutet, X ein Chloratom als Substituent in der 4-Position bedeutet, und A eine CH-Gruppe bedeutet.

## Revendications

1. Composition pour maintenir la fraîcheur des fleurs coupées, caractérisée en ce qu'elle contient un dérivé de cyclopentanol à substituant azole représenté par la formule suivante (I) et du 2-bromo-2-nitro-1,3-propandiol connue composants efficaces : 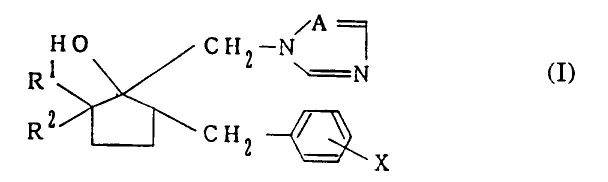 dans laquelle A représente un atome d'azote ou un groupe CH, R¹ et R² représentent indépendamment un atome d'hydrogène ou un groupe alkyle en C₁₋₃, et X représente un atome d'hydrogène ou un atome d'halogène.

2. Composition suivant la revendication 1, dans laquelle dans la formule (I), R¹ représente un groupe isopropyle, R² représente un atome d'hydrogène, X représente un atome de chlore substitué en position 4 et A représente un atome d'azote.

3. Composition suivant la revendication 1, dans laquelle dans la formule (I), R¹ représente un groupe isopropyle, R² représente un atome d'hydrogène, X représente un atome de chlore substitué en position 4 et A représente un groupe CH.

4. Utilisation d'un dérivé de cyclopentanol à substituant azole représenté par la formule suivante (I) et de 2-bromo-2-nitro-1,3-propandiol comme composants efficaces pour maintenir la fraîcheur des fleurs coupées : 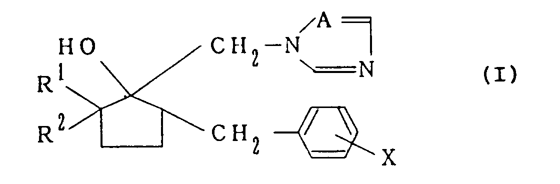 dans laquelle A représente un atome d'azote ou un groupe CH, R¹ et R² représentent indépendamment un atome d'hydrogène ou un groupe alkyle en C₁₋₃, et X représente un atome d'hydrogène ou un atome d'halogène.

5. Utilisation suivant la revendication 4, dans laquelle dans la formule (I), R¹ représente un groupe isopropyle, R² représente un atome d'hydrogène, X représente un atome de chlore substitué en position 4 et A représente un atome d'azote.

6. Utilisation suivant la revendication 4, dans laquelle dans la formule (I), R¹ représente un groupe isopropyle, R² représente un atome d'hydrogène, X représente un atome de chlore substitué en position 4 et A représente un groupe CH.
